**Europäisches Patentamt**

**European Patent Office**

**Office européen des brevets**

(19)

(11) Veröffentlichungsnummer : **0 365 795 B1**

(12)

# EUROPÄISCHE PATENTSCHRIFT

(45) Veröffentlichungstag der Patentschrift :
**11.11.92 Patentblatt 92/46**

(51) Int. Cl.⁵ : **B60G 11/14,** B60G 15/06

(21) Anmeldenummer : **89116305.7**

(22) Anmeldetag : **04.09.89**

(54) **Radaufhängung.**

(30) Priorität : **27.10.88 DE 3836561**

(43) Veröffentlichungstag der Anmeldung :
**02.05.90 Patentblatt 90/18**

(45) Bekanntmachung des Hinweises auf die
Patenterteilung :
**11.11.92 Patentblatt 92/46**

(84) Benannte Vertragsstaaten :
**DE ES FR GB IT NL**

(56) Entgegenhaltungen :
**EP-A- 0 278 088**
**DE-A- 3 337 255**
**DE-C- 3 405 174**

(73) Patentinhaber : **Dr.Ing.h.c. F. Porsche**
**Aktiengesellschaft**
**Porschestrasse 42**
**W-7000 Stuttgart 40 (DE)**

(72) Erfinder : **Achleitner, August, Dipl.-Ing.**
**Blammerbergstrasse 83**
**W-7252 Weil der Stadt (DE)**

EP 0 365 795 B1

## Beschreibung

Die Erfindung bezieht sich auf eine Radaufhängung nach dem Oberbegriff des Anspruchs.

Aus der DE-C-34 05 174 ist eine Radaufhängung bekannt, bei der eine Schraubenfeder getrennt von einem Dämpfer an einem Radführungsglied abgestützt ist. Die Schraubenfeder erstreckt sich bis in eine Ebene unterhalb einer Rad-Antriebswelle, in der das Radführungsglied an einem Radträger schwenkbeweglich gelagert wird. Damit die Schraubenfeder berührungsfrei zur quer zum Rad durchgeführten Antriebswelle anzuordnen ist, weist sie in diesem Bereich ein windungsfreies Verbindungsstück auf. Dieses verbindet das obere Federteil mit dem unteren Federteil und ermöglicht einen Verlauf der Antriebswelle durch den Hüllzylinder der Schraubenfeder. Bei einer solchen Ausführung nimmt die untere am Lenker befestigte Federauflage immer den Neigungswinkel des Lenkers ein, was zu einem Ausknicken der Schraubenfeder führen kann.

Ferner ist aus der DE-A- 33 37 255 eine Radaufhängung der im Oberbegriff des Anspruch genannten Gattung bekannt, die zur Querdurchführung einer Antriebswelle zum Rad ein über ein Gabelstück am Radführungslenker angelenkten unteren Federteller aufweist. Dieser stützt eine oberhalb der Anstriebswelle angeordnete Spiralfeder ab, welcher mittels eines am Gabelstück gehaltenen Lenkers geführt wird.

Aufgabe der Erfindung ist es, eine Radaufhängung mit einer separat zu einem Federbe angeordneten Schraubenfeder zu schaffen, die einem Freiraum für eine Antriebswelle aufweist und eine optimale Führung der Schraubenfeder gewährleistet.

Diese Aufgabe wird erfindungsgemäß durch die kennzeichnenden Merkmale des Anspruch gelöst. Weitere vorteilhafte Merkmale beinhalten die Unteransprüche.

Die mit der Erfindung hauptsächlich erzielten Vorteile bestehen darin, daß bei einer Doppelquerlenkterachse trotz einer getrennt von einem Federbein angeordneten Schraubenfeder, die oberhalb einer Rad-Antriebswelle an einem Führungselement abgestützt ist, eine relativ große Dämperübersetzung erreicht wird. Durch die Hilfskonstruktion eines geführten unteren Federstellers kann die Schraubenfeder separat angeordnet werden, was für die Erhöhung der Dämperübersetzung genutzt wird.

Damit ein Ausknicken oder ein Abspringen der nicht geführten Schraubenfeder in den Extremstellungen vermieden wird, ist die Schraubenfeder in vorteilhafter Weise auf einem am unteren Querlenker drehbar gelagerten Federteller abgestützt. Dieser Federteller wird zusätzlich über einen Hilfslenker geführt, der bei einer parallelen Anordnung zum unteren Querlenker eine annähernd parallele Führung des unteren Federtellers zur oberen Federauflage gewährleistet, so daß ein Ausknicken der Schraubenfeder vermieden wird.

Neben diesen Vorteilen wird durch das mit dem Querlenker verbundene Führungselement erreicht, daß die zu den Rädern geführten Antriebswellen frei von der Schraubenfeder verlaufen können, ohne diese auch bei extremen Fahrzuständen zu berühren. Hierzu ist das Führungselement mit einem etwa vertikal ausgerichteten Stiel versehen, an dem die Antriebswelle vorbeiläuft.

Ein Ausführungsbeispiel der Erfindung ist in der Zeichnung dargestellt und wird im folgenden näher beschrieben.

Es zeigen:

Fig .1 eine Vorderansicht der Radaufhängung bei ein- und ausgefedertem Rad,

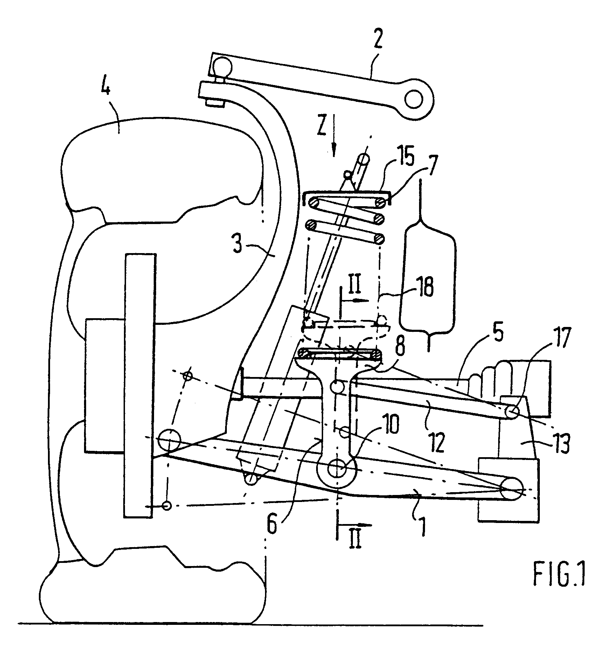

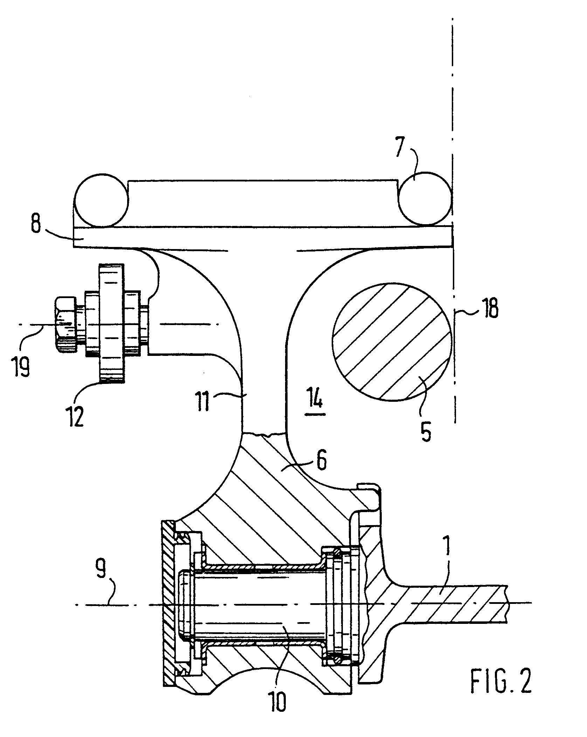

Fig .2 einen Schnitt nach der Linie II-II der Fig. 1.

Die Radaufhängung umfaßt einen Doppelquerlenker bestehend aus einem unterem Lenker 1 und einem oberen Lenker 2, die an einem Radträger 3 angelenkt sind, der mit dem Rad 4 verbunden ist. Dieses wird von einer Antriebswelle 5 getrieben, welche in Fahrzeugquerrichtung angeordnet ist.

Auf dem unteren Querlenker 1 ist unter Zwischenschaltung eines Führungselements 6 eine Schraubenfeder 7 gelagert, die sich auf einen Federteller 8 des Elements 6 abstützt. Dieses ist am unteren Lenker 1 um eine in Fahrzeuglängsrichtung verlaufende Achse 9 schwenkbar gehalten. Hierzu ist seitlich des Lenkers 1 ein Bolzen 10 befestigt, auf dem sich das Führungselement 6 abstützt.

Das Führungselement 6 ist mit einem vom Bolzen 10 vertikal aufwärts ausgerichteten Stiel 11 versehen, der sich endseitig zu dem Federteller 8 erweitert, welcher oberhalb der Antriebswelle 5 angeordnet ist. Diese verläuft nahe des Stiels 11 durch einen gebildeten Freiraum 14 zwischen dem Federteller und dem Stiel 11 und schneidet die projizierte Fläche des Federtellers 8 und ist mit einem Teilbereich innerhalb des Hüllzylinders 18 der Schraubenfeder 7 angeordnet.

Mit dem Führungselement 6 ist im Bereich des Stiels 11 ein Hilfslenker 12 verbunden, der sich in Fahrzeugquerrichtung erstreckt und um eine Achse 17 am Fahrzeugaufbau 13 sowie um eine Achse 19 am Stiel 11 schwenkbar ist.

Wie in Fig. 1 näher gezeigt ist, bewegt sich der untere Federteller 8 des Führungselements 6 aufgrund seiner Führung über den Hilfslenker 12 bei Federungsvorgängen annähernd parallel zum oberen Federteller 15

## Patentansprüche

1.   Radaufhängung für Kraftfahrzeuge (1) mit wenigstens einem Radführungsglied, das unterhalb einer Rrad-Antriebswelle (5) angeordnet und mit einer getrennt von einem Dämpfer gehaltenen Schraubenfeder (7) verbunden ist wobei die Schraubenfeder (7) am Radführungsglied (1) über ein zwischengeschaltetes Führungselement (6) schwenkbar gehalten und über einen Hilfslenker (12) geführt ist und das Element (6) einen oberhalb der Antriebswelle (5) gelagerten Federteller (8) umfaßt, dessen projizierte Fläche die benachbart verlaufende Antriebswelle (5) schneidet, und das Fürungselement (6) in einem lenkerseitig gehaltenen Bolzen (10) um eine horizontale in Fahrzeuglängsrichtung ausgerichteten Achse (9) verschwenkbar gehalten wird und über einen parallel zum Radführungsglied (1) angeordneten und am Fahrzeugaufbau (13) um eine Achse (17) verschwenkbaren Hilfslenker (12) abgestützt ist, und das Führungselement in einer Mittenlängsachse der Feder (7) angeordnet ist und in Fahrzeugquerrichtung einen Freiraum (14) zum engen Vorbeiführen der Antriebswelle (12) innerhalb des verlängerten Hüllzylinders (18) der Schraubenfeder (7) bildet dadurch gekennzeichnet, daß das Führungselement (6) einen vertikal ausgerichteten Stiel (11) umfaßt, und der Hilfslenker (12) auf einem anderen Bolzen um eine horizontale Achse (19) schwenkbar gelagert ist, wobei der andere Bolzen auf der der Antriebswelle (5) gegenüberliegenden Seite des Stiels (11) des Führungselements (6) angeordnet ist.

## Claims

1. A wheel suspension for motor vehicles, having at least one wheel guide member (1) arranged below a wheel drive shaft (5) and connected to a helical spring (7) held separate from a damping means, the helical spring (7) being held pivotably on the wheel guide member (1) by way of an interposed guide means (6) and being guided by way of an auxiliary support arm (12), and the means (6) comprising a spring plate (8) which is mounted above the drive shaft (5) and the projected face of which intersects the adjacently extending drive shaft (5), and the guide means (6) is held in a pin (10) -- held on the support arm -- so as to be pivotable about a horizontal axis (9) orientated in the longitudinal direction of the vehicle and is supported by way of an auxiliary support (12) arranged parallel to the wheel guide member (1) and pivotable on the vehicle body (13) about an axis (17), and the guide means is arranged in a median longitudinal axis of the spring (7) and in the transverse direction of the vehicle forms a free space (14) for closely passing by the drive shaft (12) inside the extrapolated cylindrical outline (18) of the helical spring (7), characterized in that the guide means (6) has a vertically orientated stem (11) and the auxiliary support arm (12) is mounted on another pin so as to be pivotable about a horizontal axis (19), the other pin being mounted on the side of the stem (11) of the guide means (6) opposite to the drive shaft (5).

## Revendications

1. Suspension de roue pour véhicules automobiles comportant au moins un organe de guidage de roue (1) qui est placé au-dessous d'un arbre d'entraînement de roue (5) et qui est assemblé avec un ressort hélicoïdal (7) maintenu séparé d'un amortisseur, dans laquelle le ressort hélicoïdal (7) est maintenu pivotant sur l'organe de guidage de roue (1), par un élément de guidage (6) intermédiaire et est guidé par un bras oscillant auxiliaire (12) et dans laquelle l'élément (6) comprend une coupelle de ressort (8), montée au-dessus de l'arbre d'entraînement (5), dont la surface projetée coupe l'arbre d'entraînement (5) s'étendant à proximité et dans laquelle l'élément de guidage (6) est maintenu pivotant dans un boulon (10), maintenu côté bras, autour d'un axe (9) horizontal, orienté dans la direction longitudinale du véhicule, et est soutenu par un bras auxiliaire (12), parallèle à l'organe de guidage de roue (1) et pivotant sur la carrosserie (13) du véhicule, autour d'un axe (17), et dans laquelle l'élément de guidage est placé dans un axe médian longitudinal du ressort (7) et forme, dans la direction transversale du véhicule, un espace libre (14) pour que l'arbre d'entraînement (12) passe tout contre le cylindre d'enveloppe (18) prolongé, à l'intérieur de celui-ci, du ressort hélicoïdal (7), caractérisée en ce que l'élément de guidage (6) comprend une tige (11) orientée verticalement et le bras auxiliaire (12) est monté pivotant, sur un autre boulon, autour d'un axe horizontal (19), l'autre boulon étant placé sur le côté, opposé à l'arbre d'entraînement (5), de la tige (11) de l'élément de guidage (6).

FIG.1

FIG. 2